# FASCICULE DE BREVET EUROPEEN

(11) **EP 2 574 506 B1**
(45) Date de publication et mention de la délivrance du brevet: **25.02.2015**
(21) Numéro de dépôt: 12186432.6
(22) Date de dépôt: 27.09.2012
(51) Int. Cl.: B60R 13/08, G10K 11/168

(54) **Procédé de réalisation d'un écran de protection acoustique destiné à recouvrir un moteur de véhicule automobile**
Verfahren zur Herstellung einer akustischen Abschirmung zum Abdecken eines Motors eines Kraftfahrzeugs
Method for producing an acoustic shield for covering an automobile engine

(30) Priorité: 30.09.2011 FR 1158876
(43) Date de publication de la demande: 03.04.2013
(73) Titulaire: CENTRE D'ETUDE ET DE RECHERCHE POUR L'AUTOMOBILE (CERA), 51100 Reims (FR)
(72) Inventeur: Waxin, Laurent, 02130 Dravegny (FR); Lecomte, Alicia, 51220 Villers-Franqueux (FR); Lhermite, Yann, 51500 Rilly la Montagne (FR)
(74) Mandataire: Sayettat, Julien Christian

(56) Documents cités:
- EP-A1- 2 364 881
- DE-A1- 3 534 690
- FR-A1- 2 901 209
- US-A1- 2004 091 615
- US-A1- 2007 287 001
- US-B2- 7 954 596

## Description

L'invention concerne un procédé de réalisation d'un écran de protection acoustique destiné à recouvrir un moteur de véhicule automobile et un écran obtenu par un tel procédé.

On connaît un procédé de réalisation d'un écran de protection acoustique destiné à recouvrir un moteur de véhicule automobile, ledit procédé comprenant les opérations suivantes :
- prévoir deux couches de feutre de verre incorporant une résine thermodurcissable,
- les empiler l'une sur l'autre en interposant entre les deux un film étanche thermoplastique,
- comprimer à chaud lesdites couches dans un moule en effectuant un tirage sous vide.

En particulier, les couches de feutre sont recouvertes de couches de protection et/ou de décor, notamment à base de non tissé, ceci permettant d'obtenir un écran présentant l'état de surface attendu.

La présence du film permet, sous l'action du tirage sous vide, de respecter au mieux la géométrie escomptée pour l'écran, ceci par placage d'une des couches de feutre par le film contre la paroi correspondante du moule.

Les documents US 2004/0091615 A1, US 2007/2870001 A1, US 7954596 B2 et DE 3534690 A1 représentent l'état actuel de la technique.

Cependant, dans le cas de géométries complexes, l'écran obtenu peut présenter une définition géométrique insuffisante, présentant par exemple une atténuation des lignes de style.

En outre, les écrans réalisés de la sorte présentent une masse surfacique importante, ceci du fait de la masse volumique intrinsèque du feutre et aussi du fait de la présence du film.

Un tel écran peut notamment présenter une masse surfacique comprise entre 1,2 et 1,5 kg/m².

Enfin, la présence du film entraîne une complexification de la réalisation et des surcoûts associés, ceci aussi bien du simple fait de sa présence que des dispositifs de tirage sous vide à prévoir sur les moules de fabrication.

L'invention a pour but de pallier ces inconvénients.

A cet effet, et selon un premier aspect, l'invention propose un procédé de réalisation d'un écran de protection acoustique destiné à recouvrir un moteur de véhicule automobile, ledit procédé comprenant les opérations suivantes :
- prévoir une couche d'endroit de feutre de verre incorporant une résine thermodurcissable, ladite couche présentant une caractéristique de contrainte-déformation relative en compression, mesurée selon la méthode décrite dans la norme ISO 3386-1 :1986, inférieure à 1 kPa,
- prévoir une couche d'envers de mousse de polyuréthanne de masse volumique comprise entre 8 et 15 g/l et de caractéristique de contrainte-déformation relative en compression, mesurée selon la méthode décrite dans la norme ISO 3386-1 :1986, comprise entre 3 et 25 kPa,
- comprimer à chaud lesdites couches empilées l'une sur l'autre dans un moule.

Le fait que la couche de mousse une fois moulée garde sa géométrie est lié à une ruine partielle du matériau lors de sa déformation.

La caractéristique de contrainte-déformation relative en compression est une mesure de l'aptitude à la compression des matériaux compressibles.

Elle est définie selon le protocole décrit dans la norme ISO 3386-1 :1986 « Matériaux polymères alvéolaires souples », qui prévoit de mesurer la pression à appliquer pour obtenir un enfoncement de 40% de l'épaisseur initiale d'une éprouvette.

La couche de mousse, qui présente une caractéristique de contrainte-déformation supérieure à celle de la couche de feutre, permet de comprimer le feutre en le forçant à épouser étroitement la géométrie du moule lui faisant face.

Quant à la couche de mousse, il est observé, de par ses caractéristiques de déformation, qu'elle se conforme de manière à épouser elle aussi étroitement la géométrie du moule lui faisant face.

On obtient de la sorte un écran dont la géométrie reflète fidèlement celle du moule, les matériaux constitutifs des couches de mousse et de feutre remplissant au mieux le moule.

L'agencement prévu permet en outre de s'affranchir d'un film thermoplastique.

Par ailleurs, le poids de l'écran est réduit, sa masse surfacique étant typiquement inférieure à 1 kg/m².

On observe enfin une amélioration des performances acoustiques de l'écran, ceci dans la mesure où son volume est maximisé du fait du remplissage optimisé du moule.

Selon un deuxième aspect, l'invention propose un écran réalisé par un tel procédé.

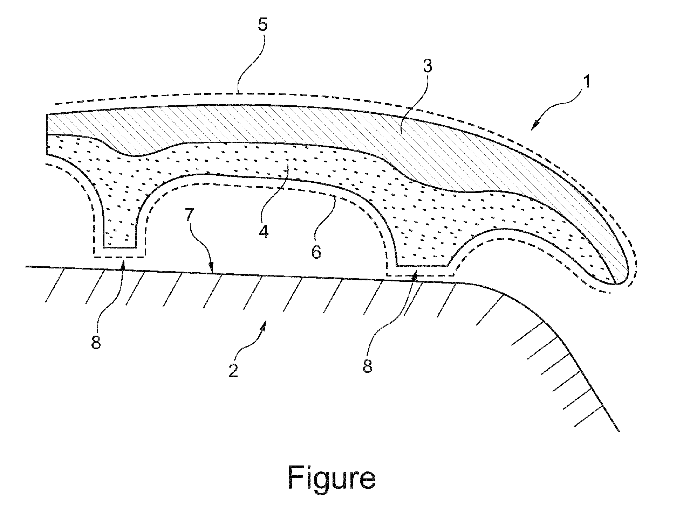

D'autres particularités et avantages de l'invention apparaîtront dans la description qui suit, faite en référence à la figure jointe qui est une représentation schématique en coupe d'un écran selon une réalisation disposé dans son environnement véhicule.

En référence à la figure, on décrit un procédé de réalisation d'un écran 1 de protection acoustique destiné à recouvrir un moteur 2 de véhicule automobile, ledit procédé comprenant les opérations suivantes :
- prévoir une couche d'endroit 3 de feutre de verre incorporant une résine thermodurcissable - notamment phénolique -, ladite couche présentant une caractéristique de contrainte-déformation relative en compression, mesurée selon le protocole décrit dans la norme ISO 3386-1 :1986, inférieure à 1 kPa, et notamment inférieure à 0,3 kPa,
- prévoir une couche d'envers 4 de mousse de polyuréthanne de masse volumique comprise entre 8 et 15 g/l et de caractéristique de contrainte-déformation relative en compression, mesurée selon le protocole décrit dans la norme ISO 3386-1 :1986, comprise entre 3 et 25 kPa,
- comprimer à chaud lesdites couches empilées l'une sur l'autre dans un moule.

La couche de feutre 3 présente notamment une masse surfacique comprise entre 400 et 800 g/m².

Sa caractéristique de contrainte-déformation présente notamment une valeur de 0,2±0,1 kPa.

Selon une réalisation, la couche de mousse 4 présente une résistance au passage de l'air inférieure à 5000 N.s.m⁻³, et notamment comprise entre 3000 et 4000 N.s.m⁻³, ceci de manière à présenter une porosité lui conférant des propriétés d'absorption acoustique.

Selon la réalisation représentée, le procédé prévoit en outre de disposer une couche de revêtement d'endroit 5 - notamment à base de tissu ou non tissé, de masse surfacique comprise par exemple entre 50 et 200g/m² - poreuse pourvue d'une colle thermodurcissable sur la couche de feutre 3 avant compression à chaud.

La couche de revêtement d'endroit 5 présente notamment une résistance au passage de l'air inférieure à 500 N.s.m⁻³, de manière à conserver la porosité de l'écran 1.

Selon la réalisation représentée, le procédé prévoit en outre de disposer une couche de revêtement d'envers 6 poreuse - notamment à base de non tissé, de masse surfacique comprise par exemple entre 50 et 200g/m² - pourvue d'une colle thermodurcissable sur la couche de mousse 4 avant compression à chaud.

La couche de revêtement d'envers présente notamment une résistance au passage de l'air inférieure à 500 N.s.m⁻³, de manière à conserver la porosité de l'écran 1.

L'intérêt d'une telle couche de revêtement d'envers 6 est notamment de permettre une protection du moteur 2 ou d'organes périphériques, tels que des tuyaux ou des câbles, vis à vis du pouvoir abrasif de la couche de mousse 4 qui peut contenir des particules de graphite abrasives.

Avec l'agencement proposé, l'écran 1, même pourvu de couches de revêtement 5,6, reste poreux, ce qui permet de réaliser une protection acoustique par absorption.

Selon une réalisation, la couche de mousse 4 présente avant compression une épaisseur comprise entre 5mm et 30mm.

On décrit à présent un écran 1 de masquage destiné à être posé contre un moteur 2 de véhicule automobile, ledit écran étant fabriqué par le procédé sus décrit, ledit écran comprenant :
- une couche de feutre de verre 3,
- une couche de mousse de polyuréthanne compressible 4.

L'écran peut comprendre en outre au moins une couche de revêtement d'endroit 5 ou d'envers 6.

Selon la réalisation représentée, l'écran 1 présente une épaisseur variable, chacune des couches 3,4 après compression présentant des zones plus ou moins comprimées, les zones les plus comprimées permettant notamment de rigidifier ledit écran.

Il est possible de prévoir de disposer une plaque en matière plastique moulée, notamment à base de polyamide, non représentée, du côté de la couche de feutre 3, ceci afin d'améliorer l'esthétique de l'écran 1.

On décrit enfin une architecture de recouvrement d'un moteur 2, ladite architecture comprenant un écran 1 et une surface supérieure 7 dudit moteur, ledit écran étant posé sur ladite surface selon au moins une zone de piètement 8 formée sous ledit écran.

Une telle réalisation permet de s'affranchir de plots de découplage.

L'architecture peut comprendre en outre au moins un moyen de fixation de l'écran 1 au moteur 2, par exemple sous forme d'un pion, non représenté, solidarisé audit moteur par emboitement.

## Revendications

1. Procédé de réalisation d'un écran (1) de protection acoustique destiné à recouvrir un moteur (2) de véhicule automobile, ledit procédé comprenant les opérations suivantes :
• prévoir une couche d'endroit (3) de feutre de verre incorporant une résine thermodurcissable, ladite couche présentant une caractéristique de contrainte-déformation relative en compression, mesurée selon le protocole décrit dans la norme ISO 3386-1 :1986, inférieure à 1 kPa, et notamment inférieure à 0,3 kPa,
• prévoir une couche d'envers (4) de mousse de polyuréthanne de masse volumique comprise entre 8 et 15 g/l et de caractéristique de contrainte-déformation relative en compression, mesurée selon le protocole décrit dans la norme ISO 3386-1 :1986, comprise entre 3 et 25 kPa,
• comprimer à chaud lesdites couches empilées l'une sur l'autre dans un moule.

2. Procédé selon la revendication 1, **caractérisé en ce que** la couche de mousse (4) présente une résistance au passage de l'air inférieure à 5000 N.s.m⁻³_{.}

3. Procédé selon la revendication 1 ou 2, **caractérisé en ce qu'il** prévoit en outre de disposer une couche de revêtement d'endroit (5) poreuse pourvue d'une colle thermodurcissable sur la couche de feutre (3) avant compression à chaud.

4. Procédé selon l'une quelconque des revendications 1 à 3, **caractérisé en ce qu'il** prévoit en outre de disposer une couche de revêtement d'envers (6) poreuse pourvue d'une colle thermodurcissable sur la couche de mousse (4) avant compression à chaud.

## Patentansprüche

1. Verfahren zur Herstellung eines akustischen Schutzschirms (1), der ausgelegt ist, um einen Kraftfahrzeugmotor (2) abzudecken, wobei das Verfahren die folgenden Schritte umfasst:
- Vorsehen einer oberen Schicht (3) aus Glasfilz, die ein wärmehärtbares Harz einschließt, wobei die Schicht eine relative Spannungs-/Verformungs-Eigenschaft mit Bezug auf die Kompression, gemessen gemäß dem Protokoll, das in der Norm ISO 3386-1:1986 beschrieben wird, von weniger als 1 kPa und insbesondere weniger als 0,3 kPa aufweist,
- Vorsehen einer unteren Schicht (4) aus Polyurethanschaum mit einer Schüttdichte zwischen 8 und 15 g/l und mit einer relativen Spannungs-/Verformungs-Eigenschaft mit Bezug auf die Kompression, gemessen gemäß dem Protokoll, das in der Norm ISO 3386-1:1986 beschrieben wird, zwischen 3 und 25 kPa aufweist,
- Heißkomprimieren der Schichten, die in einer Form aufeinander gestapelt sind.

2. Verfahren nach Anspruch 1, **dadurch gekennzeichnet, dass** die Schaumschicht (4) einen Widerstand gegen den Luftdurchlass von weniger als 5000 N.s.m⁻³ aufweist.

3. Verfahren nach Anspruch 1 oder 2, **dadurch gekennzeichnet, dass** es außerdem vorsieht, eine poröse obere Beschichtung (5) anzuordnen, die mit einem wärmehärtbaren Klebstoff auf der Filzschicht (3) vor der Heißkompression ausgestattet ist.

4. Verfahren nach einem der Ansprüche 1 bis 3, **dadurch gekennzeichnet, dass** es außerdem vorsieht, eine poröse untere Beschichtung (6) anzuordnen, die mit einem wärmehärtbaren Klebstoff auf der Schaumschicht (4) vor der Heißkompression ausgestattet ist.

## Claims

1. Method for producing an acoustic shield (1) for covering an automobile engine (2), said method comprising the following operations:
- providing a side glass felt layer (3) incorporating a thermosetting resin, said layer having a relative stress-strain characteristic in compression, measured according to the protocol described in standard ISO 3386-1:1986, less than 1 kPa, and in particular less than 0.3 kPa,
- providing a back polyurethane foam layer (4) with a density between 8 and 15 g/l and a relative stress-strain characteristic in compression, measured according to the protocol described in standard ISO 3386-1:1986, between 3 and 25 kPa,
- hot compressing said layers stacked one upon the other in a mould.

2. Method according to claim 1, **characterised in that** the foam layer (4) has an air resistance of less than 5000 N.s.m⁻³.

3. Method according to claim 1 or 2, **characterised in that** it further provides for having a porous side coating layer (5) provided with a thermosetting adhesive on the felt layer (3) before hot compression.

4. Method according to any of claims 1 to 3, **characterised in that** it further provides for having a back coating layer (6) provided with a thermosetting adhesive on the foam layer (4) before hot compression.
